# EUROPEAN PATENT SPECIFICATION

(11) **EP 2 250 785 B1**
(45) Date of publication and mention of the grant of the patent: **24.10.2012**
(21) Application number: 08806968.7
(22) Date of filing: 02.09.2008
(51) Int. Cl.: H04L 29/06

(54) **SYSTEM AND METHOD FOR SELECTING PROXY GATEWAYS IN PEER-TO-PEER NETWORKS**
SYSTEM UND VERFAHREN ZUR AUSWAHL VON PROXY-GATEWAYS IN PEER-TO-PEER-NETZWERKEN
SYSTÈME ET PROCÉDÉ DE SÉLECTION DE PASSERELLES MANDATAIRES DANS DES RÉSEAUX PAIR À PAIR

(30) Priority: 07.03.2008 US 44169
(43) Date of publication of application: 17.11.2010
(73) Proprietor: Sony Ericsson Mobile Communications AB, 221 88 Lund (SE)
(72) Inventor: RITZAU, Jan, Robert, Tobias, S-247 60 Veberöd (SE); MONTÁN, Ola, S-232 53 Åkarp (SE)
(74) Representative: Aurell, Henrik
(86) International application number: PCT/IB2008/002271
(87) International publication number: WO 2009/109805

(56) References cited:
- WO-A-02/084973
- WO-A-2007/016326
- WO-A-2007/031981
- US-A1- 2003 128 710
- US-A1- 2005 091 399

## Description

### TECHNICAL FIELD OF THE INVENTION

The technology of the present disclosure relates generally to communication between electronic devices, and more particularly to a system and method for selecting proxy gateways in peer-to-peer networks.

### DESCRIPTION OF THE RELATED ART

Communication in peer-to-peer networks commonly occurs between or among electronic devices over the Internet or other communications networks. Electronic devices, such as desktop computers, laptop computers, mobile telephones and other portable electronic devices, and various other electronic devices communicate over the Internet and comparable networks pursuant to established communications protocols collectively referred to as the Internet Protocol Suite (also referred to as TCP/IP).

Direct communication between two devices over a TCP/IP network typically requires that the non-initiating device be associated with a public IP address, such as a public Uniform Resource Locator (URL), that is accessible by the other. In many instances, however, a non-initiating device may not be associated with a public IP address. For example, a personal computer owner may not wish to permit public access to the computer, and therefore would not obtain a public IP address. Such a computer owner may additionally use firewalls and similar security devices to prohibit public access to the computer to thwart "hackers" and other security threats to protect sensitive information.

There are occasions, however, when a computer or other device owner may wish to access another electronic device for the purpose of obtaining and/or sharing content, even though the target or non-initiating device may lack a public IP address. As is termed in the art, an electronic device initiating a communication commonly is called a "client", and the electronic device that receives a communication request commonly is called a "server". For example, if a computer owner wishes to download a music file from a music service, the computer constitutes the client and the music storage device would constitute the server. Transmission of the music file to the computer may be readily accomplished if both the client and server have public IP addresses. In most cases, however, a non-initiating or server communication device (particularly if such device is personal electronic device) does not have a public address, so an alternative to direct communication may be employed.

When a communicating device lacks a public IP address, communication may be accomplished through the use of a proxy gateway, also known as a proxy server. A proxy gateway or proxy server is a device having a public IP address that private clients and servers may access for the purpose of sharing or obtaining content. The proxy gateway uses its public IP address to pass through content requests and transmissions on behalf of private clients and servers. In this manner, private clients and servers remain sealed off from the remainder of the network, with the proxy gateway providing the point of public access. Proxy gateways also may employ firewalls and other security measures to protect private clients and servers from predatory access by unwanted parties. Indeed, much of the development of communication advances relative to proxy gateways has been in the area of firewall configuration for efficiently permitting the selective access and transmission of data among private clients and servers.

The need for communication through proxy gateways has increased with the increased use of portable electronic devices. Portable electronic devices, such as mobile telephones, media players, personal digital assistants (PDAs), and others, are ever increasing in popularity. To avoid having to carry multiple devices, portable electronic devices are now being configured to provide a wide variety of functions. For example, a mobile telephone may no longer be used simply to make and receive telephone calls. A mobile telephone may also be a camera, an Internet browser for accessing news and information, an audiovisual media player, a messaging device (text, audio, and/or visual messages), a gaming device, a personal organizer, and have other functions as well. Often, users of portable electronics seek to share content with others.

Accordingly, the use of portable electronic devices for sending and receiving content, whether text, audiovisual, or other content form, is now commonplace. Portable electronic devices, however, rarely are associated with public IP addresses and therefore most often communicate through proxy gateways. Prior to this widespread use of portable electronic devices, communication of content in peer-to-peer networks tended to occur between relatively stationary devices, such as desktop computers, mainframes, large-sized servers, and similar equipment. For such devices, the selection of the proxy gateway was fairly straight forward and governed by the relatively fixed locations of the communicating devices. Portable electronic devices, however, are frequently moved from location to location, and thus the distance of a given proxy gateway to a desirable communication path may vary. Note that in this context, "distance" is not necessarily limited to a physical dimension, such as a number of feet or miles. Distance may also relate to the number of network nodes in the communication path between communicating devices, which is sometimes referred to in the art as the "logical distance".

As the communication or logical distance between electronic devices varies as the devices are moved, the selection of the proxy gateway becomes an issue. A large logical distance between the proxy gateway and the communication path between communicating devices may reduce communication quality. In addition, communication quality also may be eroded in "high traffic" situations, when a relatively large number of clients and servers are attempting to communicate over a common communication path and/or are using the same proxy gateway. In such situations, overuse of bandwidth may result in deficient signal quality and transmission rates. Proper selection of the proxy gateway, therefore, may affect the quality of a given communication involving a portable electronic device.

Document US 2003/128710 describes such a method and system of selecting the proxy gateway.

### SUMMARY

To improve the consumer experience with electronic devices, and portable electronic devices in particular, there is a need in the art for an improved system and method for selecting a proxy gateway for use in communications between or among electronic devices. The current invention provides a system and method for selecting a proxy gateway that is most suitable for enhancing a communication between a private client and server. In one embodiment, the proxy gateway is selected from among multiple accessible proxy servers based on which proxy server is the closest in logical distance to the "communication path" between a client and server. As is understood in the art and used herein, a "communication path" is the sequence of IP-numbers traversed to send a message from a host A to a host B, excluding any IP-numbers reserved for private use. Other embodiments employ additional criteria to provide variations on selection based on logical distance alone. Efficient use of available bandwidth may be enhanced, and latency decreased.

In exemplary embodiments, the selection of a proxy gateway proceeds as follows. A peer-to-peer network includes a plurality of proxy servers located adjacent one or more nodes of the network. The network further includes reference nodes in signal communication with one or more proxy servers. Each proxy server "registers" on the network by determining a communication path or route, through various nodes on the network, to a reference node. Such reference path or paths for each proxy server are recorded and stored on a network database.

When a client seeks communication with a server, the client determines its path to the server through various intervening nodes on the network. The path from the client to the server may then be compared to the reference paths for the proxy servers to search for common nodes within the client-server path and the proxy-reference node reference paths. Once common nodes are determined, the logical distance may be measured from each proxy server to the client-server path, as measured by the logical distance from the proxy server to a common node. The proxy server having the shortest logical distance to the client-server path may then be selected to act as the proxy gateway for the client-server communication. By minimizing the logical distance from the proxy gateway to the client-server communication path, the quality of the communication may be enhanced. In other embodiments, logical distance may be a factor, but not determinative, in the selection of which proxy server is to be the proxy gateway.

Therefore, according to one aspect of the invention, a client electronic device comprises communications circuitry for communicating with a server electronic device over a communication path, and a controller configured to select a proxy gateway for communication with the server electronic device from among a plurality of proxy servers. The controller compares the communication path to a plurality of reference paths corresponding to the plurality of proxy servers, each reference path being between a corresponding proxy server and a reference node, to select one of the proxy servers to be a proxy gateway for communication between the client device and the server device.

According to one embodiment of the client electronic device, the controller is further configured to compare the communication path to each of the reference paths by identifying a common node, if any, within the communication path and each of the reference paths. For each of the plurality of proxy servers whose reference path includes a common node, the controller is configured to determine the logical distance between each such proxy server and a common node. The controller is further configured to identify each proxy server having a shortest logical distance to a common node, and to select the proxy gateway from among the proxy servers having the shortest logical distance to a common node.

According to one embodiment of the client electronic device, the controller is further configured to select the proxy gateway as the proxy server having the most available bandwidth as compared to the other proxy servers having the shortest logical distance to a common node.

According to one embodiment of the client electronic device, the controller is further configured to compare the communication path to each of the reference paths by measuring the logical distance from a node of the communication path to a nearest node in each of the reference paths. For each of the reference paths, the controller is configured to add the logical distance from the nearest node to the corresponding proxy server to determine the logical distance of each of the proxy servers to a node of the communication path. The controller is further configured to identify each proxy server having a shortest logical distance to a node of the communication path, and to select the proxy gateway from among the proxy servers having the shortest logical distance to a node of the communication path.

According to one embodiment of the client electronic device, the controller is further configured to select the proxy gateway as the proxy server having the most available bandwidth as compared to the other proxy servers having the shortest logical distance to a node of the communication path.

According to one embodiment of the client electronic device, the client electronic device is a mobile telephone.

According to another aspect of the invention, a communications system comprises a client electronic device and a server electronic device, wherein the client electronic device and server electronic communicate over a communication path. The communication system further comprises a plurality of proxy servers and a reference node in communication with the plurality of proxy servers over a plurality of reference paths. A controller is configured to compare the communication path to each of the reference paths to select one of the proxy servers to be a proxy gateway for communication between the client electronic device and the server electronic device.

According to one embodiment of the communications system, the controller is further configured to compare the communication path to each of the reference paths by identifying a common node, if any, within the communication path and each of the reference paths. For each of the plurality of proxy servers whose reference path includes a common node, the controller is configured to determine the logical distance between each such proxy server and a common node. The controller is further configured to identify each proxy server having a shortest logical distance to a common node, and to select the proxy gateway from among the proxy servers having the shortest logical distance to a common node.

According to one embodiment of the communications system, the controller is further configured to select the proxy gateway as the proxy server having the most available bandwidth as compared to the other proxy servers having the shortest logical distance to a common node.

According to one embodiment of the communications system, the controller is further configured to compare the communication path to each of the reference paths by measuring the logical distance from a node of the communication path to a nearest node in each of the reference paths. For each of the reference paths, the controller is configured to add the logical distance from the nearest node to the corresponding proxy server to determine the logical distance of each of the proxy servers to a node of the communication path. The controller is further configured to identify each proxy server having a shortest logical distance to a node of the communication path, and select the proxy gateway from among the proxy servers having the shortest logical distance to a node of the communication path.

According to one embodiment of the communications system, the controller is further configured to select the proxy gateway as the proxy server having the most available bandwidth as compared to the other proxy servers having the shortest logical distance to a node of the communication path.

According to one embodiment of the communications system, the client electronic device or the server electronic device is a mobile telephone.

According to one embodiment of the communications system, the controller is located within the client electronic device.

According to one embodiment of the communications system, the communications system further comprises a database for storing information relating to each of the reference paths.

According to another aspect of the invention, a method of selecting a proxy gateway for communication between a client electronic device and a server electronic device comprising the steps of determining a communications path between the client electronic device and the server electronic device, determining a plurality of reference paths between a reference node and each of a plurality of proxy servers, comparing the communications path to each of the reference paths, and selecting one of the proxy servers to be the proxy gateway as a result of the comparison between the communication path and each of the reference paths.

According to one embodiment of the method of selecting a proxy gateway, the step of determining the communications path comprises identifying at least one node in the communications path between the client electronic device and the server electronic device.

According to one embodiment of the method of selecting a proxy gateway, the step of determining the references paths comprises, for each of the plurality of proxy servers, linking each proxy server to the reference node, and identifying at least one node in a path between each proxy server and the reference node.

According to one embodiment of the method of selecting a proxy gateway, the method further comprises comparing the communication path to each of the reference paths by identifying a common node, if any, within the communication path and each of the reference paths. For each proxy server whose reference path includes a common node, the method further comprises determining the logical distance between each such proxy server and a common node, identifying each proxy server having a shortest logical distance to a common node, and selecting the proxy gateway from among the proxy servers having the shortest logical distance to a common node.

According to one embodiment of the method of selecting a proxy gateway, the selected proxy gateway is a home server of the server device.

According to one embodiment of the method of selecting a proxy gateway, the selecting step further comprises selecting the proxy gateway having the most available bandwidth as compared to the other proxy servers having the shortest logical distance to a common node.

According to one embodiment of the method of selecting a proxy gateway, the method further comprises comparing the communication path to each of the reference paths by measuring the logical distance from a node of the communication path to a nearest node in each of the reference paths. For each of the reference paths, the method further comprises adding the logical distance from the nearest node to the corresponding proxy server to determine the logical distance of each of the proxy servers to a node of the communication path, identifying each proxy server having a shortest logical distance to a node of the communication path, and selecting the proxy gateway from among the proxy servers having the shortest logical distance to a node of the communication path.

According to one embodiment of the method of selecting a proxy gateway, the selected proxy gateway is a home server of the server device.

According to one embodiment of the method of selecting a proxy gateway, the selecting step further comprises selecting the proxy gateway having the most available bandwidth as compared to the other proxy servers having the shortest logical distance to a node of the communication path.

According to one embodiment of the method of selecting a proxy gateway, the selecting step further comprises selecting the proxy gateway having the most available bandwidth as compared to the other proxy servers.

Features that are described and/or illustrated with respect to one embodiment may be used in the same way or in a similar way in one or more other embodiments and/or in combination with or instead of the features of the other embodiments.

It should be emphasized that the terms "comprises" and "comprising," when used in this specification, are taken to specify the presence of stated features, integers, steps or components but do not preclude the presence or addition of one or more other features, integers, steps, components or groups thereof.

### BRIEF DESCRIPTION OF THE DRAWINGS

FIG. 1 is a schematic diagram of an exemplary peer-to-peer network in accordance with an embodiment of the present invention.
FIG. 2 is a flow chart depicting an exemplary method of proxy server registration in accordance with an embodiment of the present invention.
FIG. 3 is a schematic block diagram of operative portions of an exemplary proxy server for use in accordance with embodiments of the present invention.
FIG. 4 is a flow chart depicting an exemplary method of selecting a proxy gateway for communication between a private client and server in accordance with an embodiment of the present invention.
FIG. 5 is a flow chart depicting an exemplary method of selecting a proxy gateway based on a comparison of a communication path and proxy server reference paths in accordance with an embodiment of the present invention.
FIG. 6 is a schematic view of a mobile telephone as an exemplary electronic device for use in accordance with an embodiment of the present invention.
FIG. 7 is a schematic block diagram of operative portions of the mobile telephone of FIG. 6.

### DETAILED DESCRIPTION OF EMBODIMENTS

Embodiments of the present invention will now be described with reference to the drawings, wherein like reference numerals are used to refer to like elements throughout. It will be understood that the figures are not necessarily to scale.

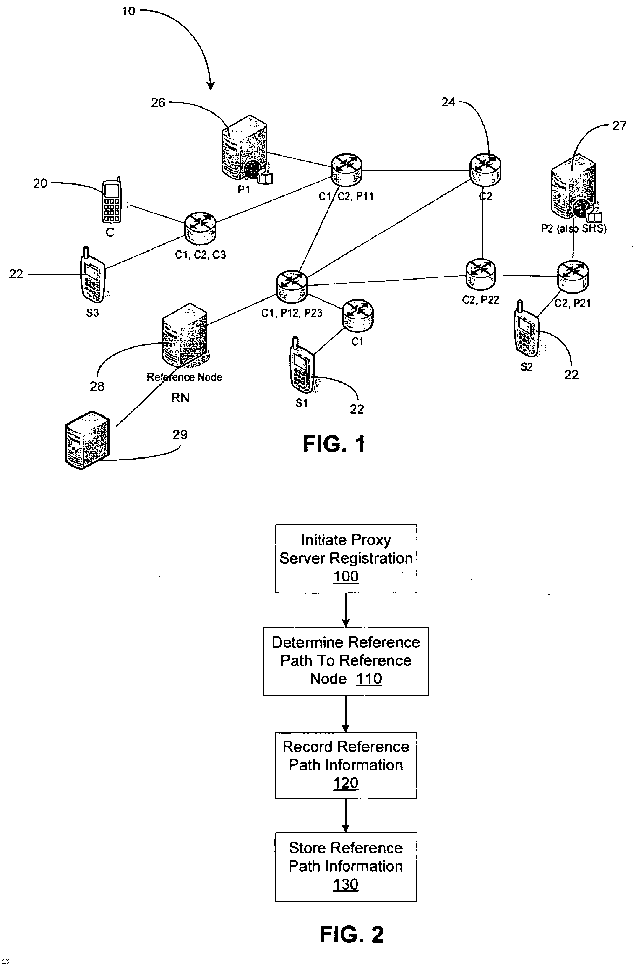

FIG. 1 depicts an exemplary peer-to-peer network 10 for use in accordance with embodiments of the present invention. As shown, the network includes a client device 20 and multiple server devices 22. Although only one client device is shown, it will be appreciated that the network may include any number of client devices. Similarly, although three server devices are shown, the network may include any number of server devices. In addition, the three server devices may represent three different electronic devices, or may represent a single electronic device being located in three different physical locations.

As depicted, the client and server devices are mobile telephones. It will be appreciated that the invention is not intended to be limited to the context of mobile telephones and may relate to any type of appropriate electronic device, examples of which include a media player, a gaming device, a desktop or laptop computer, or other stationary or portable electronic devices. For purposes of the description herein, the interchangeable terms "electronic equipment" and "electronic device" also may include portable radio communication equipment. The term "portable radio communication equipment," which sometimes herein is referred to as a "mobile radio terminal," includes all equipment such as mobile telephones, pagers, communicators, electronic organizers, personal digital assistants (PDAs), smartphones, and any communication apparatus or the like. In particular, a mobile telephone is used as the exemplary client and server devices because, as stated above, the selection of an appropriate proxy gateway tends to be more significant when at least one of the communicating devices is a portable electronic device being moved around.

In this exemplary embodiment, network 10 operates pursuant to TCP/IP communication protocols. Content may be transmitted between or among devices via numerous nodes 24. Network 10 further includes proxy servers 26 and 27, and a reference node 28. As with client device 20 and server devices 22, the precise number of nodes, proxy servers, and reference nodes may vary and be numerous. In this embodiment, proxy server 27 also acts as a home server for the server devices 22 (labeled as SHS for "server home server" in the figure). A home server generally provides network access and network-related applications for electronic devices that use the network. For example, home server functionality may be provided by an Internet service provider or a mobile communications carrier. The home server may be thought of as an initial access point for client and server devices operating on the network. The home server may be a global server used for numerous devices on the network, or may be a home server for one or a small group of devices owned by a single individual or family in a sub-network.

Network 10 also includes a database 29, which, for example, may be stored on a computer or other network storage device. It will be appreciated that the database 29 may be located anywhere on the network, and may be stored in one storage device or stored over a plurality of storage devices. In one embodiment, the database 29 may be distributed over a plurality of home servers operating on the network.

In this embodiment, the server devices 22 are private devices each lacking a public IP address. As is conventional, therefore, the client device may communicate with any of the server devices using a proxy gateway. The proxy gateway may be selected from one of the proxy servers 26 or 27. An issue, therefore, becomes the selection of which proxy server should act as the proxy gateway to provide enhanced communication quality and efficiency. The system may be thought of as including two process components: proxy server registration and proxy gateway selection.

FIG. 2 is a flow chart depicting an exemplary method of proxy server registration in accordance with an embodiment of the present invention. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

The method may begin at step 100, at which a proxy server initiates registration. At step 110, the proxy server may determine a reference path, which is a communication path from the proxy server, through one or more nodes of the network, to a reference node. At step 120, the reference node may record reference path information, and at step 130, the reference path information may be stored within a network database. For example, the reference path information may be stored as part of a database component housed within the reference node itself, or reference path information may be stored external to, but accessible by, the reference node as shown, for example, in FIG. 1. The reference path information may be recorded and stored as a list of nodes in a path between a given proxy server and a reference node.

Additional details of proxy server registration may be understood by referring again to FIG. 1. To simplify the tracing of the applicable communication paths, proxy server 26 has been labeled P1, proxy server 27 has been labeled P2, and reference node 28 has been labeled RN. The registration of P1 may proceed as follows. After initiating the registration process, proxy server P1 may determine a reference path to the reference node 28. As depicted in FIG. 1, for example, a communication path from P1 to the reference node proceeds through a first node at P 11, and then through a second node at P12. The applicable reference path for P1, therefore, is:
P1 → P11 → P12 → RN.
Similarly, a communication path from the proxy server P2 proceeds to the reference node through a first node at P21, a second node at P22, and a third node at P23. The applicable reference path for P2, therefore, is:
P2 → P21 → P22 → P23 → RN.
These reference paths may be recorded by the reference node 28 and stored in the database 29 on the network such that reference path information may be accessed via the reference node. As stated above, network 10 may include more than one reference node, and, therefore, for a given proxy server reference path information to each reference node may be determined and stored in the database. Accordingly, more than one reference path may be associated with each proxy server, depending on the number of nearby reference nodes.

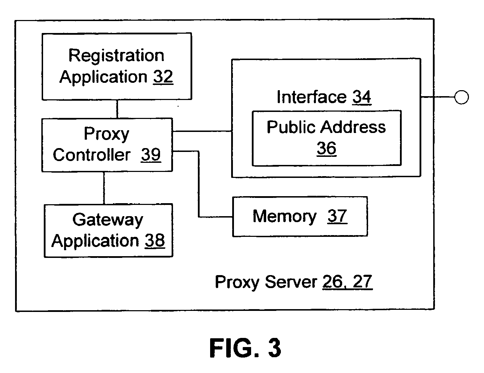

FIG. 3 is a schematic block diagram of operative portions of an exemplary proxy server 26, 27 for use in accordance with embodiments of the present invention. The proxy server may include a registration application 32 for determining and registering the reference paths as described above. The proxy server also may include an interface 34 for communicating with the remainder of the network. For example, the interface 34 may be used for communicating with the reference node to determine the reference path. Furthermore, because the proxy servers each may operate as a proxy gateway, the interface 34 may include a public address 36, such as a public URL or comparable public IP address. In this manner, private client and server devices may access the proxy server to employ the gateway functionality. In this vein, the proxy server also may include gateway application 38 for performing the various gateway functions. Such functions may include, for example, linking the private client and server devices, receiving and transmitting content for pass through among the private devices, and firewall and other security functions. The proxy server also may include a memory 37 for storing applications and content. The memory 37 also may participate as part of the network database 29 for storing reference path and other proxy gateway information in accordance with embodiments of the present invention. Overall operation of the proxy server may be accomplished by a proxy controller 39.

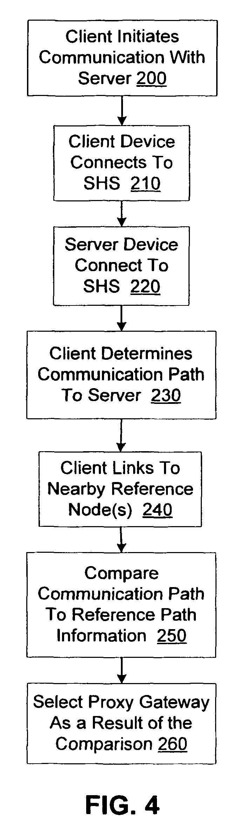

Once accessible proxy servers are registered, a proxy server may be selected from among those registered to act as a proxy gateway for communication between one or more private client and private server devices. FIG. 4 is a flow chart depicting an exemplary method of selecting a proxy gateway for communication between a private client and server in accordance with an embodiment of the present invention. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention. The following paragraphs represent an overview of the method of FIG. 4. Each step is described in greater detail below.

The method may begin at step 200 at which a client device may initiate communication with a private server device. To establish a network communication link between the client and server, at steps 210 and 220, the client and server devices may connect to the server's home server (SHS). If the target server device is unavailable, for example the server device is turned off or otherwise not connected to the network, the client may attempt to "wake up" the server. The client may do so by transmitting an alert signal to the server via the server's home server. The alert signal may be an SMS message or other form of message. Once the target server device is alerted, it may connect to its home server, as indicated in step 220.

At step 230, the client device may determine a communication path to the server device. At step 240, the client may establish a link to one or more nearby reference nodes to access reference path information for accessible proxy servers. At step 250, the communication path may then be compared to the reference path information of available proxy servers, which has been created and stored in a network database as described above. The number or scope of the compared reference paths may be limited to those associated with a reference node (or reference nodes) nearby to the client, such as reference nodes within a specified logical distance to the client. At step 260, a proxy gateway may be selected as a result of the comparison. For example, the proxy gateway may be selected as the proxy server that is closest in logical distance to the client-server communication path. As further described below, various additional criteria may be used in conjunction with logic distance to select which proxy server should act as the proxy gateway for a given communication.

Additional details of proxy gateway selection may be understood by referring again to FIG. 1. As before, to simplify the tracing of the applicable communication paths, proxy server 26 has been labeled P1, proxy server 27 has been labeled P2, and reference node 28 has been labeled RN. In addition, the client device 20 has been labeled C, and the three server devices 22 have been labeled S1, S2, and S3 respectively. Note also that in these examples, proxy server 27 also constitutes the servers' home server SHS. Because home servers often have public addresses, it would be common for home servers also to act as proxy servers, although this need not be so in all cases. Furthermore, as stated above, S1, S2, and S3 may be three different server devices, or may represent one server device being in three different physical locations.

As a first example, consider the selection of a proxy gateway for communication between the client C and the first server device S1. As stated above, the client and server each first link to the SHS as is typical. The client device then determines a communication path to the target server device, S1 in this first example. In FIG. 1, the communication path between C and S1 is designated by C1. The communication path C1 (C →1S1) extends through four nodes. The client device may then link to the nearby reference node to retrieve the stored reference path information for the accessible proxy servers. The communication path C → S1 may then be compared to the reference path information of the proxy servers. In this example, by comparing the communication path C → S1 to the reference path of the first proxy server P1 → RN, it can be seen that these paths share common nodes at the nodes indicated by P11 and P12. In addition, P1 is adjacent to the common node indicated by P11.

The communication path C → S1 also may be compared to the reference path for P2 → RN for the second proxy server. As seen in FIG.1, these paths share a common node at the node indicated by P23. Note, however, that this common node of the communication path and the P2 reference path is three nodes away from P2. Accordingly, the logical distance of P2 from the communication path C → S1 is greater than the logical distance of P1 from the communication path. Other parameters being equal, P1 would be selected as the proxy gateway as being within the closest logical distance of the communication path C → S1.

As a second example, consider the selection of a proxy gateway for communication between the client C and the second server device S2. As before, the client and server each first link to the SHS as is typical. The client device then determines a communication path to the target server device, S2 in this second example. In FIG. 1, the communication path between C and S2 is designated by C2. The communication path C2 (C → S2) extends through five nodes. The client device may then link to the nearby reference node to retrieve the stored reference path information for the accessible proxy servers. The communication path C → S2 may then be compared to the reference path information of the proxy servers. In this example, by comparing the communication path C → S2 to the reference path of the first proxy server P1 → RN, it can be seen that these paths share a common node at the node indicated by P11. Again, P1 is adjacent to this common node.

The communication path C → S2 also may be compared to the reference path P2 → RN of the second proxy server. As seen in FIG.1, these paths share common nodes at the nodes indicated by P21 and P22. Referring to node P21, it can be seen that, like P1, P2 also is adjacent to one of the common nodes. Thus, the logical distances of the proxy servers P1 and P2 to the communication path are equal. Logical distance, therefore, may not provide a determinative criterion for selection of the proxy gateway. In such a situation, other preference criteria may be employed. For example, an automatic preference may be set to use the home server SHS as the proxy gateway. As an alternative example, the proxy server having the most available bandwidth may be selected as the proxy gateway. In this manner, low traffic proxy servers may be preferred over high traffic proxy servers. Other preference criteria may be devised as well.

As a third example, consider the selection of a proxy gateway for communication between the client C and the third server device S3. As before, the client and server each first link to the SHS as is typical. The client device then determines a communication path to the target server device, S3 in this third example. In FIG. 1, the communication path between C and S3 is designated by C3. The communication path C3 (C → S3) extends through only one node. The client device may then link to the nearby reference node to retrieve the stored reference path information for the accessible proxy servers. The communication path C → S3 may then be compared to the reference paths of the proxy servers. In this example, by comparing the communication path C → S3 to the reference paths of the first proxy server P1 → RN and second proxy server P2 → RN, it can be seen that the communication path does not share any node in common with either of the reference paths of the proxy servers.

In such a situation, the selection of the proxy gateway may proceed as follows. Using the stored reference path information, a determination may be made of a logical distance between the reference paths and the communication path. For example, as to proxy server P1, node P11 is the node within the reference path nearest in logical distance to the communication path C → S3. Such node P11 is one node away from the communication path. Furthermore, from the database it is known that proxy server P1 is adjacent the node P11. In this example, therefore, the logical distance of P1 to the communication path includes two nodes. Similarly, as to server P2, node P23 is the node within the reference path nearest in logical distance to the communication path C → S3. Such node P23 is two nodes away from the communication path. Furthermore, from the database it is known that proxy server P2 is three nodes from node P23. In this example, therefore, the logical distance of P2 to the communication path includes five nodes. Accordingly, the logical distance of P2 from the communication path C → S3 is greater than the logical distance of P1 from the communication path. Other parameters being equal, P1 again would be selected as the proxy gateway as being within the closest logical distance to the communication path C → S3.

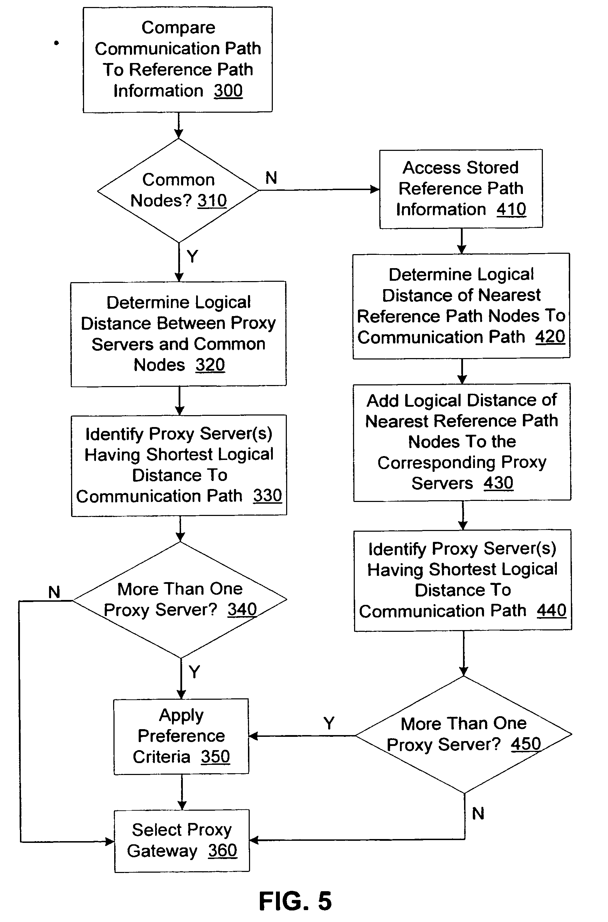

The above examples demonstrate how a proxy gateway may be selected under a variety of circumstances to enhance communication quality and efficiency. FIG. 5 is a flow chart depicting an exemplary method of selecting a proxy gateway based on a comparison of a communication path and proxy server reference paths. Although the exemplary method is described as a specific order of executing functional logic steps, the order of executing the steps may be changed relative to the order described. Also, two or more steps described in succession may be executed concurrently or with partial concurrence. It is understood that all such variations are within the scope of the present invention.

The method may begin at step 300, in which a communication path may be compared to reference path information pertaining to the reference paths of a plurality of available proxy servers. (This step corresponds to step 250 of FIG. 4.) As indicated with reference to FIG. 4, the number or scope of the compared reference paths may be limited to those associated with a reference node (or reference nodes) nearby to the client, such as reference nodes within a specified logical distance to the client. At step 310, a determination may be made as to whether there exist any common nodes between the communication path and one or more of the reference paths. If so, at step 320 the logical distance is calculated from each applicable proxy server to the corresponding common node of the communication and reference paths. Step 330 constitutes identifying the proxy server or servers having the shortest logical distance to the communication path (i.e., the shortest logical distance to a common node). At step 340, a determination may be made as to whether one proxy server, or more than one proxy server, is located at the shortest logical distance to the communication path (common node). If only one proxy server is at such shortest logical distance, the method may proceed to step 360, and that proxy server may be selected as the proxy gateway. This branch of FIG. 5 corresponds to the first example described above.

If at step 340, however, it is determined that more than one proxy server is located at the shortest logical distance from the communication path, the method may proceed to step 350. At step 350, preference criteria may be applied to select a proxy gateway from among a plurality of proxy servers situated at the shortest logical distance from the communication path. As stated above, preference criteria may include, for example, a preference for a home server, a preference for a low-traffic server, and/or other preference criteria as may be devised. Based on the application of the preference criteria, at step 360 the proxy gateway is selected. This branch of FIG. 5 corresponds to the second example described above.

Referring back to step 310, if there are no common nodes between the communication path and any of the reference paths, the method may proceed to step 410. As step 410, a client may access the stored reference path information, such as by accessing the network database through a nearby reference node or nodes, or by other available means. At step 420, a logical distance may be determined between the communication path and the nearest node of each of the reference paths. To this logical distance, at step 430 is added, for each corresponding proxy server, the logical distance between the node nearest to the communication path and the corresponding proxy server. In this manner, the total logical distance of each proxy server to the communication path is determined. Step 440 constitutes identifying the proxy server or servers having the shortest logical distance to the communication path based on the result of steps 420 and 430. At step 450, a determination may be made as to whether one proxy server, or more than one proxy server, is located at the shortest logical distance to the communication path. If only one proxy server is at such shortest logical distance, the method may proceed to step 360, and that proxy server may be selected as the proxy gateway. This branch of FIG. 5 corresponds to the third example described above. If at step 450, however, it is determined that more than one proxy server is located at the shortest logical distance from the communication path, the method may proceed to step 350. At step 350, as described above, preference criteria may be applied to select a proxy gateway from among a plurality of proxy servers situated at the shortest logical distance from the communication path.

As an alternative embodiment, there may be circumstances in which preference criteria may be determinative of the selection of the proxy gateway, independent of a shortest logical distance. For example, suppose proxy server 26 of FIG. 1 has the shortest logical distance to the communication path, but the proxy server also lacks significant available bandwidth due to unusually heavy traffic. In such a situation, a different proxy server may be a more suitable proxy gateway despite a longer logical distance to the communication path. A bandwidth check (or other availability check), therefore, may be employed before the proxy gateway is selected. In this manner, preference criteria may be employed alternatively to, or in combination with, logical distance to select overall the most suitable proxy gateway.

Similarly, should available bandwidth for a proxy gateway suddenly decrease during a communication, for example due to a sudden increase in traffic, a new proxy server may be selected to act as the proxy gateway by the same method. In one embodiment, multiple proxy servers may be selected and ranked in a preference order based on relative suitability for use as the proxy gateway. Such rankings may be stored in the network database. In this manner, should a connection be lost or bandwidth drops, a new proxy gateway may be selected immediately from the ordered list.

In another embodiment, a gateway selection history may be stored for various client and/or server devices. For example, if two devices communicate often, there would be no need to select the gateway anew each time. Rather, a gateway history may be used initially to provide an immediate selection of a proxy gateway based on passed usage in previous communications. Gateway histories may be stored in memory within client devices, server devices, SHSs, or elsewhere on the network.

In view of the various ways by which the proxy gateway may be selected, it is desirable that there be as many proxy servers on the network as is practicable. For example, individual users or small sub-networks of users may be offered financial and/or other incentives to maintain local proxy servers, each of which would be potentially selectable as a proxy gateway. With an increased number of proxy servers, the likely logical distance between any one of them and a communication path is reduced. Available bandwidth at a given proxy server also may be increased as gateway functions are distributed over a larger number of proxy servers.

In the various exemplary embodiments, the client and server devices have been depicted as being mobile telephones. The reason, as stated above, is because proxy gateway selection becomes more significant in communication between portable electronic devices, which may be moved from location to location.

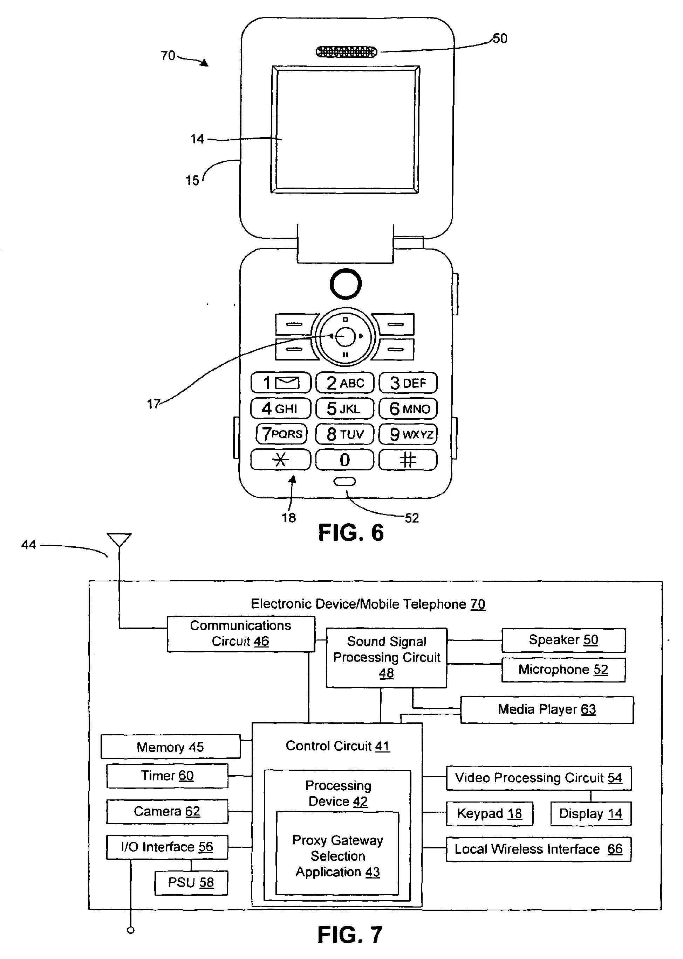

Accordingly, FIG. 6 depicts an exemplary mobile telephone 70 for use in accordance with embodiments of the present invention. Mobile telephone 70 may be configured to operate as both a client device and a server device in accordance with embodiments of the present invention. Mobile telephone 70 may be a clamshell phone with a flip-open cover 15 movable between an open and a closed position. In FIG. 6, the cover is shown in the open position. It will be appreciated that mobile telephone 70 may have other configurations, such as a "block" or "brick" configuration.

FIG. 7 represents a functional block diagram of the mobile telephone 70. The mobile telephone 70 may include a primary control circuit 41 that is configured to carry out overall control of the functions and operations of the mobile telephone 10. The control circuit 41 may include a processing device 42, such as a CPU, microcontroller or microprocessor.

Among their functions, to implement the features of the present invention, the control circuit 41 and/or processing device 42 may comprise a controller that may execute program code stored on a machine-readable medium embodied as proxy gateway selection application 43. Application 43 may be a stand-alone software application or form a part of a software application that carries out additional tasks related to the mobile telephone 70. Application 43 may be executed to perform a variety of functions associated with embodiments of the present invention. For example, application 43 may access reference path information from a nearby reference node or nodes, determine the communication path to a server device, compare the communication path to the reference paths, select the proxy gateway based upon such comparison, apply preference criteria, and so on. However, although application 43 may be wholly embodied in mobile telephone 70 in an exemplary embodiment, it will be appreciated that the various functions may be spread over several components of the system. For example, one or more functions of the system may be performed by the proxy servers, reference nodes, server devices, etc. For example, proxy gateway application 38 within proxy servers 26, 27 (see FIG. 3) may perform system functions comparable to application 43 in mobile telephone 70.

It will be apparent to a person having ordinary skill in the art of computer programming, and specifically in application programming for mobile telephones, servers or other electronic devices, how to program a mobile telephone or other electronic device to operate and carry out logical functions associated with applications 38 or 43. Accordingly, details as to specific programming code have been left out for the sake of brevity. Also, while the code may be executed by control circuit 41 in accordance with exemplary embodiments, such controller functionality could also be carried out via dedicated hardware, firmware, software, or combinations thereof, without departing from the scope of the invention.

Referring again to FIGs. 6 and 7, additional features of the mobile telephone 70 will now be described. For the sake of brevity, generally conventional features of the mobile telephone 70 will not be described in great detail herein. The mobile telephone 70 may include an antenna 44 coupled to a communications circuit 46. The communications circuit 46 may include call circuitry that enables the mobile telephone 70 to establish a call and/or exchange signals with a called/calling device, typically another mobile telephone or landline telephone, or another electronic device. The communications circuit 46 also may be configured to transmit, receive, and/or process data such as text messages, often referred to as "SMS" (which stands for short message service) messages. The communications circuit 46 also may be configured to transmit, receive, and/or process electronic mail messages, multimedia messages (e.g., colloquially referred to by some as "an MMS," which stands for multimedia message service), image files, video files, audio files, ring tones, streaming audio, streaming video, data feeds (including podcasts) and so forth. Processing such data may include storing the data in a memory 45, executing applications to allow user interaction with data, displaying video and/or image content associated with the data, outputting audio sounds associated with the data and so forth. The mobile telephone 70 further includes a sound signal processing circuit 48 for processing audio signals transmitted by and received from the communications circuit 46. Coupled to the sound processing circuit 48 are a speaker 50 and microphone 52 that enable a user to listen and speak via the mobile telephone 70 as is conventional.

Mobile telephone 70 has a display 14 viewable when the clamshell telephone is in the open position. The display 14 displays information to a user regarding the various features and operating state of the mobile telephone 10, and displays visual content received by the mobile telephone 70 and/or retrieved from a memory 45.

A keypad 18 provides for a variety of user input operations. For example, keypad 18 typically includes alphanumeric keys for allowing entry of alphanumeric information such as telephone numbers, phone lists, contact information, notes, etc. In addition, keypad 18 typically includes special function keys 17 such as a "send" key for initiating or answering a call, and others. The special function keys 17 may also include various keys for navigation and selection operations to access menu information within the mobile telephone 70. As shown in FIG. 6, for example, the special function keys may include a five-way navigational ring containing four directional surfaces and a center button that may be used as an "enter key" selection button. Some or all of the keys may be used in conjunction with the display as soft keys. Keys or key-like functionality also may be embodied as a touch screen associated with the display 14.

The display 14 may be coupled to the control circuit 41 by a video processing circuit 54 that converts video data to a video signal used to drive the various displays. The video processing circuit 54 may include any appropriate buffers, decoders, video data processors and so forth. The video data may be generated by the control circuit 41, retrieved from a video file that is stored in the memory 45, derived from an incoming video data stream received by the radio circuit 48 or obtained by any other suitable method. A media player 63 within the mobile telephone may be used to play audiovisual files stored in memory or streamed over a network.

The mobile telephone 70 also may include a local wireless interface 66, such as an infrared transceiver and/or an RF adaptor (e.g., a Bluetooth adapter), for establishing communication with an accessory, another mobile radio terminal, a computer or another device. For example, the local wireless interface 66 may operatively couple the mobile telephone 70 to a headset assembly (e.g., a PHF device) in an embodiment where the headset assembly has a corresponding wireless interface. The mobile telephone 70 also may include an I/O interface 56 that permits connection to a variety of I/O conventional I/O devices. One such device is a power charger that can be used to charge an internal power supply unit (PSU) 58.

Although the invention has been shown and described with respect to certain preferred embodiments, it is understood that equivalents and modifications will occur to others skilled in the art upon the reading and understanding of the specification. The present invention includes all such equivalents and modifications, and is limited only by the scope of the following claims.

## Claims

1. A client electronic device (20) comprising:
communications circuitry (46) for communicating with a server electronic device (22) over a communication path; and
a controller (41, 42) configured to select a proxy gateway for communication with the server electronic device from among a plurality of proxy servers (26, 27), wherein the controller compares the communication path to a plurality of reference paths corresponding to the plurality of proxy servers, each reference path being between a corresponding proxy server and a reference node (28), to select one of the proxy servers to be a proxy gateway for communication between the client device and the server device.

2. The client electronic device (20) of claim 1, wherein the controller (41, 42) is further configured to:
compare the communication path to each of the reference paths by identifying a common node (24), if any, within the communication path and each of the reference paths;
for each of the plurality of proxy servers (26, 27) whose reference path includes a common node, determine the logical distance between each such proxy server and a common node;
identify each proxy server having a shortest logical distance to a common node; and
select the proxy gateway from among the proxy servers having the shortest logical distance to a common node.

3. The client electronic device (20) of claim 2, wherein the controller (41, 42) is further configured to select the proxy gateway as the proxy server (26, 27) having the most available bandwidth as compared to the other proxy servers having the shortest logical distance to a common node.

4. The client electronic device (20) of claim 1, wherein the controller (41, 42) is further configured to:
compare the communication path to each of the reference paths by measuring the logical distance from a node (24) of the communication path to a nearest node in each of the reference paths;
for each of the reference paths, add the logical distance from the nearest node to the corresponding proxy server (26, 27) to determine the logical distance of each of the proxy servers to a node of the communication path;
identify each proxy server having a shortest logical distance to a node of the communication path; and
select the proxy gateway from among the proxy servers having the shortest logical distance to a node of the communication path.

5. A communications system (10) comprising:
a client electronic device (20);
a server electronic device (22), wherein the client electronic device and server electronic communicate over a communication path;
a plurality of proxy servers (26, 27);
a reference node (28) in communication with the plurality of proxy servers over a plurality of reference paths; and
a controller (41, 42) configured to compare the communication path to each of the reference paths to select one of the proxy servers to be a proxy gateway for communication between the client electronic device and the server electronic device.

6. The communications system (10) of claim 5, wherein the controller (41, 42) is further configured to:
compare the communication path to each of the reference paths by identifying a common node (24), if any, within the communication path and each of the reference paths;
for each of the plurality of proxy servers (26, 27) whose reference path includes a common node, determine the logical distance between each such proxy server and a common node;
identify each proxy server having a shortest logical distance to a common node; and
select the proxy gateway from among the proxy servers having the shortest logical distance to a common node.

7. The communications system (10) of claim 5, wherein the controller (41, 42) is further configured to:
compare the communication path to each of the reference paths by measuring the logical distance from a node (24) of the communication path to a nearest node in each of the reference paths;
for each of the reference paths, add the logical distance from the nearest node to the corresponding proxy server (26, 27) to determine the logical distance of each of the proxy servers to a node of the communication path;
identify each proxy server having a shortest logical distance to a node of the communication path; and
select the proxy gateway from among the proxy servers having the shortest logical distance to a node of the communication path.

8. The communications system (10) of claim 7, wherein the controller (41, 42) is further configured to select the proxy gateway as the proxy server (26, 27) having the most available bandwidth as compared to the other proxy servers having the shortest logical distance to a node of the communication path.

9. A method of selecting a proxy gateway for communication between a client electronic device (20) and a server electronic device (22) comprising the steps of:
determining a communications path between the client electronic device and the server electronic device;
determining a plurality of reference paths between a reference node (28) and each of a plurality of proxy servers (26, 27);
comparing the communications path to each of the reference paths; and
selecting one of the proxy servers to be the proxy gateway as a result of the comparison between the communication path and each of the reference paths.

10. The method of claim 9, wherein the step of determining the communications path comprises identifying at least one node (24) in the communications path between the client electronic device (20) and the server electronic device (22).

11. The method of any of claims 9-10, wherein the step of determining the references paths comprises, for each of the plurality of proxy servers (26, 27):
linking each proxy server to the reference node (28); and
identifying at least one node (24) in a path between each proxy server and the reference node.

12. The method of any of claims 9-11, further comprising:
comparing the communication path to each of the reference paths by identifying a common node (24), if any, within the communication path and each of the reference paths;
for each proxy server (26, 27) whose reference path includes a common node, determining the logical distance between each such proxy server and a common node;
identifying each proxy server having a shortest logical distance to a common node; and
selecting the proxy gateway from among the proxy servers having the shortest logical distance to a common node.

13. The method of claim 12, wherein the selecting step further comprises selecting the proxy gateway having the most available bandwidth as compared to the other proxy servers (26, 27) having the shortest logical distance to a common node.

14. The method of any of claims 9-11, further comprising:
comparing the communication path to each of the reference paths by measuring the logical distance from a node (24) of the communication path to a nearest node in each of the reference paths;
for each of the reference paths, adding the logical distance from the nearest node to the corresponding proxy server (26, 27) to determine the logical distance of each of the proxy servers to a node of the communication path;
identifying each proxy server having a shortest logical distance to a node of the communication path; and
selecting the proxy gateway from among the proxy servers having the shortest logical distance to a node of the communication path.

15. The method of claim any of claims 9-14, wherein the selecting step further comprises selecting the proxy gateway having the most available bandwidth as compared to the other proxy servers (26, 27).

## Patentansprüche

1. Elektronische Client-Vorrichtung (20), mit:
einer Kommunikationsschaltung (46) zum Kommunizieren mit einer elektronischen Server-Vorrichtung (22) über einen Kommunikationsweg; und
einer Steuerung (41, 42), die konfiguriert ist zum Wählen eines Proxy-Gateways zum Kommunizieren mit der elektronischen Server-Vorrichtung, aus einer Vielzahl von Proxy-Servern (26, 27), wobei die Steuerung den Kommunikationsweg mit einer Vielzahl von Referenzwegen vergleicht, die mit der Vielzahl von Proxy-Servern zusammenhängen, wobei jeder Referenzweg zwischen einem damit zusammenhängenden Proxy-Server und einem Referenzknoten (28) ist, zum Wählen von einem der Proxy-Server als ein Proxy-Gateway zur Kommunikation zwischen der Client-Vorrichtung und der Server-Vorrichtung.

2. Elektronische Client-Vorrichtung (20) nach Anspruch 1, wobei die Steuerung (41, 42) ferner konfiguriert ist zum:
Vergleichen des Kommunikationswegs mit jedem der Referenzwege, durch Identifizieren eines gemeinsamen Knotens (24), wenn einer vorhanden ist, in dem Kommunikationsweg und jedem der Referenzwege;
für jeden der Vielzahl der Proxy-Servern (26, 27), dessen Referenzweg einen gemeinsamen Konten enthält, Bestimmen des logischen Abstands zwischen jedem solchen Proxy-Server und einem gemeinsamen Knoten;
Identifizieren jedes Proxy-Servers mit einem kürzesten logischen Abstand zu einem gemeinsamen Knoten; und Auswählen des Proxy-Gateways unter den Proxy-Servern mit dem kürzesten logischen Abstand zu einem gemeinsamen Knoten.

3. Elektronische Client-Vorrichtung (20) nach Anspruch 2, wobei die Steuerung (41, 42) ferner konfiguriert ist zum Wählen des Proxy-Gateways als den Proxy-Server (26, 27) mit der am meisten verfügbaren Bandbreite, verglichen mit den anderen Proxy-Servern, die den kürzesten logischen Abstand zu einem gemeinsamen Knoten aufweisen.

4. Elektronische Client-Vorrichtung (20) nach Anspruch 1, wobei die Steuerung (41, 42) ferner konfiguriert ist zum:
Vergleichen des Kommunikationsweges für jeden der Referenzwege durch Messen des logischen Abstands von einem Knoten (24) des Kommunikationsweges zu einem nächstliegenden Knoten in jedem der Referenzwege;
für jeden der Referenzwege, Hinzufügen des logischen Abstands von dem nächsten Knoten zu dem damit zusammenhängenden Proxy-Server (26, 27), um den logischen Abstand von jedem der Proxy-Server zu einem Knoten des Kommunikationsweges zu bestimmen;
Identifizieren jedes Proxy-Servers mit einem kürzesten logischen Abstand zu einem Knoten des Kommunikationsweges; und
Wählen des Proxy-Gateways unter den Proxy-Servern mit dem kürzesten logischen Abstand zu einem Knoten des Kommunikationsweges.

5. Kommunikationssystem (10), mit:
einer elektronischen Client-Vorrichtung (20);
einer elektronischen Server-Vorrichtung (22), wobei die elektronische Client-Vorrichtung und der elektronische Server über einen Kommunikationsweg kommunizieren;
eine Vielzahl von Proxy-Servern (26, 27);
einen Referenzknoten (28), der in einer Kommunikation mit der Vielzahl von Proxy-Servern über eine Vielzahl von Referenzwegen steht; und
eine Steuerung (41, 42), die konfiguriert ist zum Vergleichen des Kommunikationsweges für jeden der Referenzwege, zum Auswählen von einem der Proxy-Server als ein Proxy-Gateway zur Kommunikation zwischen der elektronischen Client-Vorrichtung und der elektronischen Server-Vorrichtung.

6. Kommunikationssystem (10) nach Anspruch 5, wobei die Steuerung (41, 42) ferner konfiguriert ist zum:
Vergleichen des Kommunikationsweges für jeden der Referenzwege, durch Identifizieren eines gemeinsamen Knotens (24), wenn einer vorhanden ist, in dem Kommunikationsweg und jedem der Referenzwege;
für jeden der Vielzahl von Proxy-Servern (26, 27), dessen Referenzweg einen gemeinsamen Knoten enthält, Bestimmen des logischen Abstands zwischen jedem solchen Proxy-Server und einem gemeinsamen Knoten;
Identifizieren jedes Proxy-Servers mit einem kürzesten logischen Abstand zu einem gemeinsamen Knoten; und Wählen des Proxy-Gateways unter den Proxy-Servern mit dem kürzesten logischen Abstand zu einem gemeinsamen Knoten.

7. Kommunikationssystem (10) nach Anspruch 5, wobei die Steuerung (41, 42) ferner konfiguriert zum:
Vergleichen des Kommunikationsweges mit jedem der Referenzwege, durch Messen des logischen Abstands von einem Knoten (24) des Kommunikationsweges zu einem nächstliegenden Knoten in jedem der Referenzwege;
für jeden der Referenzwege, Hinzufügen des logischen Abstands von dem nächsten Knoten zu dem damit zusammenhängenden Proxy-Server (26, 27), um den logischen Abstand von jedem der Proxy-Server zu einem Knoten des Kommunikationswegs zu bestimmen;
Identifizieren jedes Proxy-Servers mit einem kürzesten logischen Abstand zu einem Knoten des Kommunikationsweges; und
Wählen des Proxy-Gateways unter den Proxy-Servern mit dem kürzesten logischen Abstand zu einem Knoten des Kommunikationsweges.

8. Kommunikationssystem (10) nach Anspruch 7, wobei die Steuerung (41, 42) ferner konfigurier ist zum Wählen des Proxy-Gateways als der Proxy-Server (26, 27) mit der am meisten verfügbaren Bandbreite, verglichen mit den anderen Proxy-Servern, die den kürzesten logischen Abstand zu einem Knoten des Kommunikationsweges aufweisen.

9. Verfahren zum Wählen eines Proxy-Gateways zur Kommunikation zwischen einer elektronischen Client-Vorrichtung (20) und einer elektronischen Server-Vorrichtung (22), mit den Schritten zum:
Bestimmen eines Kommunikationsweges zwischen der elektronischen Client-Vorrichtung und der elektronischen Server-Vorrichtung;
Bestimmen einer Vielzahl von Referenzwegen zwischen einem Referenzknoten (28) und jedem einer Vielzahl von Proxy-Servern (26, 27);
Vergleichen des Kommunikationsweges für jeden der Referenzwege; und
Wählen eines der Proxy-Server als das Proxy-Gateway, als ein Ergebnis des Vergleichs zwischen dem Kommunikationsweg und jedem der Referenzwege.

10. Verfahren nach Anspruch 9, wobei der Schritt zum Bestimmen des Kommunikationsweges ein Identifizieren zumindest eines Knotens (24) in dem Kommunikationsweg zwischen der elektronischen Client-Vorrichtung (20) und der elektronischen Server-Vorrichtung (22) umfasst.

11. Verfahren nach irgendeinem der Ansprüche 9-10, wobei der Schritt zum Bestimmen der Referenzwege umfasst, für jeden der Vielzahl von Proxy-Servern (26, 27):
Verknüpfen jedes Proxy-Servers mit dem Referenzknoten (28) ; und
Identifizieren zumindest eines Knotens (24) in einem Weg zwischen jedem Proxy-Server und dem Referenzknoten.

12. Verfahren nach irgendeinem der Ansprüche 9-11, ferner umfassend:
Vergleichen des Kommunikationsweges mit jedem der Referenzwege, durch Identifizieren eines gemeinsamen Knotens (24), wenn einer vorhanden ist, in dem Kommunikationsweg und jedem der Referenzwege;
für jeden Proxy-Server (26, 27), dessen Referenzweg einen gemeinsamen Knoten enthält, Bestimmen des logischen Abstands zwischen jedem solchen Proxy-Server und einem gemeinsamen Knoten;
Identifizieren jedes Proxy-Servers mit einem kürzesten logischen Abstand zu einem gemeinsamen Knoten; und
Wählen des Proxy-Gateways unter den Proxy-Servern mit dem kürzesten logischen Abstand zu einem gemeinsamen Knoten.

13. Verfahren nach Anspruch 12, wobei der Schritt zum Wählen ferner ein Wählen des Proxy-Gateways mit der am meisten verfügbaren Bandbreite umfasst, verglichen mit den anderen Proxy-Servern (26, 27), die den kürzesten logischen Abstand zu einem gemeinsamen Knoten aufweisen.

14. Verfahren nach irgendeinem der Ansprüche 9-11, ferner umfassend:
Vergleichen des Kommunikationsweges mit jedem der Referenzwege, durch Messen des logischen Abstands von einem Knoten (24) des Kommunikationswegs zu einem am nächsten liegenden Knoten in jedem der Referenzwege;
für jeden der Referenzwege, Hinzufügen des logischen Abstands von dem am nächsten liegenden Knoten zu den damit zusammenhängenden Proxy-Server (26, 27), um den logischen Abstand von jedem der Proxy-Server zu einem Knoten des Kommunikationsweges zu bestimmen;
Identifizieren jedes Proxy-Servers mit einem kürzesten logischen Abstand zu einem Knoten des Kommunikationsweges; und
Wählen des Proxy-Gateways unter den Proxy-Servern mit dem kürzesten logischen Abstand zu einem Knoten des Kommunikationsweges.

15. Verfahren nach irgendeinem der Ansprüche 9-14, wobei der Schritt zum Wählen ferner ein Wählen des Proxy-Gateways mit der am meisten verfügbaren Bandbreite umfasst, verglichen mit den anderen Proxy-Servern (26, 27).

## Revendications

1. Dispositif électronique client (20), comprenant :
une circuiterie de communications (46), destinée à communiquer avec un dispositif électronique serveur (22) sur un trajet de communication ; et
un contrôleur (41, 42) configuré pour sélectionner une passerelle mandataire afin de communiquer avec le dispositif électronique serveur, parmi une pluralité de serveurs mandataires (26, 27), le contrôleur comparant le trajet de communication avec une pluralité de trajets de référence correspondant à la pluralité de serveurs mandataires, chaque trajet de référence se situant entre un serveur mandataire correspondant et un noeud de référence (28), afin de sélectionner l'un des serveurs mandataires comme passerelle mandataire en vue de la communication entre le dispositif client et le dispositif serveur.

2. Dispositif électronique client (20) selon la revendication 1, dans lequel le contrôleur (41, 42) est en outre configuré pour :
comparer le trajet de communication avec chacun des trajets de référence, en identifiant un noeud commun (24) éventuellement présent sur le trajet de communication et sur chacun des trajets de référence ;
pour chaque serveur parmi la pluralité de serveurs mandataires (26, 27) dont le trajet de référence comprend un noeud commun, déterminer la distance logique entre chacun desdits serveurs mandataires et un noeud commun ;
identifier chacun des serveurs mandataires ayant une distance logique la plus courte par rapport à un noeud commun ; et
sélectionner la passerelle mandataire parmi les serveurs mandataires ayant la distance logique la plus courte par rapport à un noeud commun.

3. Dispositif électronique client (20) selon la revendication 2, dans lequel le contrôleur (41, 42) est en outre configuré pour sélectionner comme passerelle mandataire le serveur mandataire (26, 27) ayant plus de bande passante disponible que les autres serveurs mandataires ayant la distance logique la plus courte par rapport à un noeud commun.

4. Dispositif électronique client (20) selon la revendication 1, dans lequel le contrôleur (41, 42) est en outre configuré pour :
comparer le trajet de communication avec chacun des trajets de référence, en mesurant la distance logique entre un noeud (24) du trajet de communication et un noeud le plus proche sur chacun des trajets de référence ;
pour chacun des trajets de référence, ajouter la distance logique entre le noeud le plus proche et le serveur mandataire (26, 27) correspondant pour déterminer la distance logique entre chacun des serveurs mandataires et un noeud du trajet de communication ;
identifier chacun des serveurs mandataires ayant une distance logique la plus courte par rapport à un noeud du trajet de communication ; et
sélectionner la passerelle mandataire parmi les serveurs mandataires ayant la distance logique la plus courte par rapport à un noeud du trajet de communication.

5. Système de communication (10), comprenant :
un dispositif électronique client (20) ;
un dispositif électronique serveur (22), le dispositif électronique client et le dispositif électronique serveur communiquant sur un trajet de communication ;
une pluralité de serveurs mandataires (26, 27) ;
un noeud de référence (28) qui communique avec la pluralité de serveurs mandataires via une pluralité de trajets de référence ; et
un contrôleur (41, 42) configuré pour comparer le trajet de communication avec chacun des trajets de référence afin de sélectionner un des serveurs mandataires comme passerelle mandataire pour la communication entre le dispositif électronique client et le dispositif électronique serveur.

6. Système de communication (10) selon la revendication 5, dans lequel le contrôleur (41, 42) est en outre configuré pour :
comparer le trajet de communication avec chacun des trajets de référence, en identifiant un noeud commun (24) éventuellement présent sur le trajet de communication et sur chacun des trajets de référence ;
pour chaque serveur parmi la pluralité de serveurs mandataires (26, 27) dont le trajet de référence comprend un noeud commun, déterminer la distance logique entre chacun desdits serveurs mandataires et un noeud commun ;
identifier chacun des serveurs mandataires ayant une distance logique la plus courte par rapport à un noeud commun ; et
sélectionner la passerelle mandataire parmi les serveurs mandataires ayant la distance logique la plus courte par rapport à un noeud commun.

7. Système de communication (10) selon la revendication 5, dans lequel le contrôleur (41, 42) est en outre configuré pour :
comparer le trajet de communication avec chacun des trajets de référence, en mesurant la distance logique entre un noeud (24) du trajet de communication et un noeud le plus proche sur chacun des trajets de référence ;
pour chacun des trajets de référence, ajouter la distance logique entre le noeud le plus proche et le serveur mandataire (26, 27) correspondant pour déterminer la distance logique entre chacun des serveurs mandataires et un noeud du trajet de communication ;
identifier chacun des serveurs mandataires ayant une distance logique la plus courte par rapport à un noeud du trajet de communication ; et
sélectionner la passerelle mandataire parmi les serveurs mandataires ayant la distance logique la plus courte par rapport à un noeud du trajet de communication.

8. Système de communication (10) selon la revendication 7, dans lequel le contrôleur (41, 42) est en outre configuré pour sélectionner comme passerelle mandataire le serveur mandataire (26, 27) ayant plus de bande passante disponible que les autres serveurs mandataires ayant la distance logique la plus courte par rapport à un noeud commun.

9. Procédé de sélection d'une passerelle mandataire pour la communication entre un dispositif électronique client (20) et un dispositif électronique serveur (22), comprenant les étapes consistant à :
déterminer un trajet de communication entre le dispositif électronique client et le dispositif électronique serveur ;
déterminer une pluralité de trajets de référence entre un noeud de référence (28) et chaque serveur parmi une pluralité de serveurs mandataires (26, 27) ;
comparer le trajet de communication avec chacun des trajets de référence ; et
sélectionner l'un des serveurs mandataires comme passerelle mandataire à la suite de la comparaison entre le trajet de communication et chacun des trajets de référence.

10. Procédé selon la revendication 9, dans lequel l'étape de détermination du trajet de communication comprend l'étape consistant à identifier au moins un noeud (24) sur le trajet de communication entre le dispositif électronique client (20) et le dispositif électronique serveur (22).

11. Procédé selon l'une quelconque des revendications 9 et 10, dans lequel l'étape de détermination des trajets de référence comprend, pour chacun des serveurs parmi la pluralité de serveurs mandataires (26, 27), les étapes consistant à :
lier chaque serveur mandataire au noeud de référence (28) ; et
identifier au moins un noeud (24) sur un trajet entre chaque serveur mandataire et le noeud de référence.

12. Procédé selon l'une quelconque des revendications 9 à 11, comprenant en outre les étapes consistant à :
comparer le trajet de communication avec chacun des trajets de référence, en identifiant un noeud commun (24) éventuellement présent sur le trajet de communication et sur chacun des trajets de référence ;
pour chaque serveur parmi la pluralité de serveurs mandataires (26, 27) dont le trajet de référence comprend un noeud commun, déterminer la distance logique entre chacun desdits serveurs mandataires et un noeud commun ;
identifier chacun des serveurs mandataires ayant une distance logique la plus courte par rapport à un noeud commun ; et
sélectionner la passerelle mandataire parmi les serveurs mandataires ayant la distance logique la plus courte par rapport à un noeud commun.

13. Procédé selon la revendication 12, dans lequel l'étape de sélection comprend en outre l'étape consistant à sélectionner la passerelle mandataire ayant plus de bande passante disponible que les autres serveurs mandataires (26, 27) ayant la distance logique la plus courte par rapport à un noeud commun.

14. Procédé selon l'une quelconque des revendications 9 à 11, comprenant en outre les étapes consistant à :
comparer le trajet de communication avec chacun des trajets de référence, en mesurant la distance logique entre un noeud (24) du trajet de communication et un noeud le plus proche sur chacun des trajets de référence ;
pour chacun des trajets de référence, ajouter la distance logique entre le noeud le plus proche et le serveur mandataire (26, 27) correspondant pour déterminer la distance logique entre chacun des serveurs mandataires et un noeud du trajet de communication ;
identifier chacun des serveurs mandataires ayant une distance logique la plus courte par rapport à un noeud du trajet de communication ; et
sélectionner la passerelle mandataire parmi les serveurs mandataires ayant la distance logique la plus courte par rapport à un noeud du trajet de communication.

15. Procédé selon l'une quelconque des revendications 9 à 14, dans lequel l'étape de sélection comprend en outre l'étape consistant à sélectionner la passerelle mandataire ayant le plus de bande passante disponible par rapport aux autres serveurs mandataires (26, 27).
